# EUROPÄISCHE PATENTANMELDUNG

(11) **EP 1 757 710 A1**
(43) Veröffentlichungstag der Anmeldung: **28.02.2007**
(21) Anmeldenummer: 05405489.5
(22) Anmeldetag: 23.08.2005
(51) Int. Cl.: C23C 4/00, C23C 30/00, C23C 26/02

(54) **Werkstück mit einer thermisch gespritzten Oberflächenschicht**

(71) Anmelder: Sulzer Metco Coatings GmbH, 38223 Salzgitter (DE)
(72) Erfinder: Jansen, Franz, 52499 Baesweiler (DE); Kreisel, Klaus, 38229 Salzgitter (DE)
(74) Vertreter: Kluthe, Stefan

(57) **Zusammenfassung**

Die Erfindung betrifft Werkstück (1) mit einer thermisch gespritzten Oberflächenschicht (2), wobei an dem Werkstück (1) in mindestens einem vorgebbaren Bereich (3) eine Schutzbeschichtung (31), insbesondere eine korrosionsbeständige Schutzbeschichtung (31) vorgesehen ist. Die Schutzbeschichtung (31) ist dabei eine aufgeschweißte metallische Schutzbeschichtung (31), insbesondere eine Korrosionsschutzschicht in Form eines aufgeschweißten metallischen Korrosionsschutzbleches (31).

## Beschreibung

Die Erfindung betrifft ein Werkstück mit einer thermisch gespritzten Oberflächenschicht, sowie ein Verfahren zur Herstellung eines solchen Werkstücks gemäss dem Oberbegriff des unabhängigen Anspruchs der jeweiligen Kategorie.

Ganz verschiedene Arten von Werkstücken sind im Betriebszustand an verschiedenen Bereichen ganz unterschiedlichen Belastungen durch die Umgebung ausgesetzt, so dass zum Beispiel an unterschiedliche Oberflächenbereiche ein und desselben Werkstücks ganz verschiedene Anforderungen gestellt werden. So muss zum Beispiel ein hydraulischer Kolben, der in einem entsprechenden Zylinder geführt wird und an einer Arbeitsfläche mit einem Arbeitsfluid mit einem hydraulischen Druck beaufschlagbar ist, z.B. in einem ersten Oberflächenbereich, der im Betriebszustand entlang einer Lauffläche des Zylinders geführt wird, in dem zuvor erwähnten ersten Oberflächenbereich gute Gleiteigenschaften aufweisen, so dass der Kolben möglichst reibungsfrei innerhalb des Zylinders führbar ist. Ausserhalb des Zylinders treibt der Kolben zum Beispiel eine Vorrichtung an, die sich in einem aggressiven Medium befindet, so dass eine äussere Oberfläche des Kolbens zumindest teilweise dem aggressiven Medium ausgesetzt ist.

Beispielsweise kann der Kolben ein Antriebskolben zum Bewegen eines Schleusentors in Meerwasser sein, so dass zumindest ein äusserer Teil des Kolbens dem aggressiven Salzwasser ausgesetzt ist, während eine erste Oberfläche des Antriebskolbens in einem hydraulischen Zylinder geführt ist und somit nicht dem aggressiven Salzwasser ausgesetzt ist, da der erste Oberflächenbereich durch die Zylinderwände geschützt ist.

Natürlich kann in einem anderen Beispiel das aggressive Medium auch ein heisses Gas, z.B. eine Flamme, oder ein aggressives Öl oder irgendein anderes chemische und / oder physikalisch aggressives Fluid bzw, eine entsprechend aggressive Umgebung sein. Die aggressiven Umgebungen, denen eine zweite Oberfläche eines solchen Werkstücks ausgesetzt sein können, können neben Salzwasser auch Säuren, Laugen, heisse und / oder korrosive Gase und / oder Flüssigkeiten sein, aber zum Beispiel auch heisse Flammen oder, wie gesagt, jede andere Art von für eine zweite Oberfläche des Werkstücks aggressive Umgebungseinflüsse.

Dabei ist das zuvor geschilderte Problem, dass ein und dasselbe Werkstück in einem ersten Oberflächenbereich eine bestimmte Oberflächeneigenschaften aufweisen muss, während ein zweiter Oberflächenbereich einer aggressiven Umgebung ausgesetzt ist, natürlich nicht auf hydraulische Zylinder beschränkt. Diese Probleme sind von einer Vielzahl von verschiedenen Werkstücken und Bauteilen bekannt, an die in zwei verschiedenen Qberflächenbereichen ganz verschiedene Anforderungen gestellt sind. Beispiele sind Walzen zum Walzen der verschiedensten Werkstoffe, Kolben, Kolbenstangen, Teile von luft- oder landgestützen Turbinen. Teile von Brennkraftmaschinen, um nur einige Beispiele zu nennen, die eine bei weitem nicht abschliessende Liste darstellen.

Zur besseren Verdeutlichung der aus dem Stand der Technik bekannten Probleme werden im folgenden stellvertretend für alle möglichen Werkstücke, die Probleme diskutiert, wie sie typischerweise bei Flammbehandlungswalzen im Betriebszustand auftreten.

Flammbehandlungswalzen werden beispielsweise bei der Kunststofffolienproduktion mehrfach eingesetzt und benötigt. Es handelt sich dabei in der Regel um thermisch sowie chemisch hochbeanspruchte Walzen, die von daher mit entsprechend korrosionsbeständigen Schutzschichten versehen sein müssen. Gleichzeitig wird bei derartigen Flammbehandlungswalzen von innen her eine Kühlung realisiert, wobei sichergestellt sein soll, dass die Kühlwirkung am Walzenumfang möglichst optimal wirkt, um den Kunststofffilm ausreichend zu kühlen und eine thermische Überhitzung zu vermeiden.

Von daher ist bereits vorgeschlagen worden, Flammbehandlungswalzen mit einer Blechummantelung zu versehen, die beispielsweise aus wenigen Millimeter dickem Edelstahlblech besteht. Dieses Edelstahlblech wird unter bestimmter lateraler Vorspannung auf den Walzenkörper z.B. aus Baustahl aufgebracht. Bekannt sind auch Flammbehandlungswalzen, die einen Außenmantel umfassen, der vollständig aus Edelstahl gefertigt ist. Beide vorstehend genannten Ausführungen sind zwar korrosionsbeständig, haben jedoch den Nachteil, dass das relativ dicke Edelstahlblech mit deutlich reduzierter Wärmeleitung gegenüber herkömmlichen Baustahl nur eine reduzierte Kühlwirkung aufweist. Als weiterer Nachteil ergibt sich, dass die Blechummantelung nicht immer vollständig auf dem Grundkörper der Walze aufliegt, wodurch der Wärmefluss ebenfalls behindert und die Kühlwirkung eingeschränkt wird. Schließlich sind die Herstellkosten derartiger Walzen beträchtlich.

Darüber hinaus ist es bekannt, für die Kühlung einer in einem Herstell- oder Oberflächenbehandlungsprozess erwärmten Kunststofffolie (insbesondere bei der Herstellung von mono- oder biaxial verstreckten Polypropylenfilm) Flammbehandlungswalzen mit unterschiedlichen Oberflächen einzusetzen. Verwendet werden beispielsweise Flammbehandlungswalzen mit Oberflächen, die aus einer Mehrschichtverchromung, z.B. einer Verchromung auf einer Nickelschicht, sowie metallischen oder karbidischen Hochgeschwindigkeits- oder Flammspritzschichten bestehen. All diese Oberflächenausführungen bergen eine potentielle Beschädigungsgefahr für die herzustellenden Kunstslofffolien in sich, und zwar aufgrund der an der Oberflächenstruktur ausgebildeten, teilweise sehr kleinen Poren. Diese Poren in der Schutzoberfläche einer Walze bedingen jedoch eine korrosive Unterwanderung der Schutzoberfläche mit nachfolgender teilweiser Schichtablösung, Ebenso können Kratzer und Schnitte von Messern, die zum Reinigen der Walzen eingesetzt werden, häufig zu Korrosionsansätzen führen, da diese die Schutzschicht verletzen und diese deshalb undicht wird.

Es ist daher eine Aufgabe der vorliegenden Erfindung, ein verbessertes Werkstück, insbesondere auch eine verbesserte Flammbehandlungswalze sowie ein verbessertes Verfahren zur Herstellung eines Werkstücks zu schaffen, bei welchem eine erste Oberfläche sehr gute Eigenschaften zum Schutz des Werkstücks, insbesondere sehr gute Korrosionsschutzeigenschaften aufweist, vor allem wenn das Werkstück zumindest im ersten Oberflächenbereich einer aggressiven Umgebung, beispielsweise einer thermisch stark belasteten Umgebung ausgesetzt ist. Insbesondere ist es im Speziellen eine Aufgabe der Erfindung, eine entsprechende Flammbehandlungswalze zu schaffen, die beispielsweise bei der Herstellung einer mono- oder biaxialen verstreckten Kunststofffofienbahn, in einer Folienreckanlage eingesetzt werden kann.

Die diese Aufgaben in apparativer und vertahrenstechnischer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein Werkstück mit einer thermisch gespritzten Oberflächenschicht, wobei an dem Werkstück in mindestens einem vorgebbaren Bereich eine Schutzbeschichtung, insbesondere eine korrosionsbeständige Schutzbeschichtung vorgesehen ist. Die Schutzbeschichtung ist dabei eine aufgeschweißte metallische Schutzbeschichtung, insbesondere eine Korrosionsschutzschicht in Form eines aufgeschweißten metallischen Korrosionsschutzbleches.

In einem speziellen Ausführungsbeispiel umfasst die Schutzbeschichtung eine nickel- und / oder chromhaltige Stahllegierung und / oder eine schweißbare Stahllegierung 316L und / oder C276, und / oder einen rostbeständigen und / oder einen säurebeständigen und / oder laugebeständigen Stahl aus der Werkstoffgruppe umfassend die Stähle 1.4301, 1.4303, 1,4401, 1.4404, 1.4406, 1.4505, 1.4506, und / oder einen karbidischen und / oder keramischen Werkstoff, insbesondere CrC, TiC, TaC, Cr₃C₂, Fe₃C, WC, Diamant, Niobiumcarbid, Vanadiumcarbid, und / oder Al₂O₃, Cr₂O₃, TiO₂, ZrO₂, und / oder ein Borid und / oder ein Nitrid, insbesondere cBN (kubisches Bornitrid) oder hBN (hexagonales Bornitrid).

Dabei kann die gespritzte Oberflächenschicht eine nickel- und / oder chromhaltige Stahllegierung umfassen, und / oder eine Stahllegierung 316L oder C276 umfassen, und / oder einen rostbeständigen und / oder einen säurebeständigen Stahl aus der Werkstoffgruppe umfassend die Stähle 1.4301, 1.4303, 1,4401, 1.4404, 1.4406, 1.4505, 9 .4506 umfassen, und / oder eine mittels einem karbidischem und / oder keramischem Pulver gespritzte Oberflächenschicht, insbesondere eine mittels CrC, TiC, TaC, Cr₃C₂, Fe₃C, WC, Diamant, Niobiumcarbid, Vanadiumcarbid, und / oder Al₂O₃, Cr₂O₃, TiO₂, ZrO₂, und / oder einem Borid und / oder einem Nitrid, insbesondere cBN oder hBN, gespritzte Oberflächenschicht umfassen.

In einem bevorzugten Ausführungsbeispiel umfasst die Oberflächenschicht ein Element aus der Gruppe der Elemente bestehend aus C, Cr, Mn, Fe, Mo, S, P, Y, Si, Hf, Pa, Re, Pt, Co, Ni, und bildet somit insbesondere eine Gleitschicht und / oder eine Hartschicht, die der Oberflächenschicht des Werkstücks insbesondere sehr gute tribologische Eigenschaften und / oder eine besonders gute Härte gegen mechanische Belastungen verleiht, wie zum Beispiel bereits in der EP 1 022 351 A1 gezeigt, deren Offenbarung hiermit in diese Anmeldung inkorporiert wird.

In einem anderen Ausführungsbeispiel eines erfindngsgemässen Werkstücks umfasst die Oberflächenschicht ZrO₂ und / oder YO₂, insbesondere mit Yttrium stabilisiertes ZrO₂-8%Y₂O₃, und / oder ZrSiO₄ und / oder SiO₂ und / einem Lanthanoxid und / oder Sc₂O₃, und ist insbesondere eine Wärmedämmschicht. Entsprechende Wärmedämmschichten und Verfahren zu deren Herstellung sind z.B. in der EP 0990713 oder in der WO 03/087422 bereits ausführlich beschrieben, deren Offenbarungen hiermit ebenfalls in die vorliegende Anmeldung vollumfänglich aufgenommen wird.

In einem für die Praxis besonders wichtigen Ausführungsbeispiel ist das Werkstück eine Walze, insbesondere Flammbehandlungswalze, welche zumindest zwei in einer Axialrichtung des Werkstücks versetzt zueinander liegende und in Umfangsrichtung des Werkstücks verlaufende Bereiche umfasst, welche Bereiche durch eine Mittelzone, an die sich jeweils zum zugehörigen stirnseitigen Ende des Werkstücks eine Randzone anschließt, gebildet sind, und die Mittelzone eine gespritzte Oberflächenschicht aufweist. Dabei umfassen die Randzonen eine auf das Werkstück aufgeschweißte Schutzbeschichtung, insbesondere in Form eines Schutzbleches.

Dabei kann das Werkstück aber auch eine andere Walze sein, insbesondere eine Walze zum Walzen von Papier, von Metall, Glas, Kunststoff, oder einem Verbundwerkstoff. Im Speziellen ist die Walze eine Walze zum Walzen von heissen Metall-, Glas-, Kunststoffbahnen oder Bahnen aus einem Verbundwerkstoff oder einem anderen zu walzenden Werkstoff.

Bevorzugt kann das Werkstück auch eine Komponente einer Maschine, im Speziellen einer Brennkraftmaschine, insbesondere ein Kolben, ein Zylinder oder ein Ventil sein, oder eine Komponente einer Werkzeugmaschine, insbesondere einer Spritzgussmaschine oder einer anderen Vorrichtung sein.

In einem für die Praxis besonders bedeutenden Ausführungsbeispiel ist die Schutzbeschichtung eine Schutzschicht gegen Korrosion durch chemisch und / oder physikalisch aggressive Fluide, insbesondere, aber nicht nur, gegen Salzwasser und / oder Säuren und / oder Laugen und / oder heisse Flüssigkeiten und / oder heisse Gase, insbesondere Flamme, im speziellen auch gegen oxidierende und oder / reduzierende Flüssigkeiten und / oder gegen oxidierende und / oder reduzierende Gase.

Die Erfindung betrifft weiter ein Verfahren zur Herstellung eines Werkstücks, insbesondere, aber nicht nur, einer Flammbehandlungswalze, geartet wie oben beschrieben, wobei eine Oberflächenschicht mittels eines thermischen Spritzverfahren, insbesondere mittels Flammspritzen. Lichtbogenspritzen, Plasmaspritzen, Flammschockspritzen, Hochgeschwindigkeitsflammspritzen. Flammspritzschweissen oder einem Kaltspritzverfahren, insbesondere Cold-Spraying, aufgebracht wird, und eine metallische Schutzbeschichtung, insbesondere eine Korrosionsschicht und / oder ein Korrosionsschutzblech aufgeschweißt wird. Die zuvor beispielhaft aufgezählten Verfahren sind dem Fachmann auf dem Gebiet des thermischen Spritzens alle wohlbekannt und brauchen daher im Rahmen dieser Anmeldung nicht näher erläutert zu werden.

Zur Verdeutlichung der allgemeinen erfindungsgemässen Lehre wird die Erfindung im folgenden noch einmal exemplarisch in detaillierterer Form am Beispiel einer Flammbehandlungswalze erläutert, die stellvertretend für alle Werkstücke steht, die die vorliegende Erfindung betrifft.

Als spezielles Ausführungsbeispiel eines erfindungsgemässen Werkstücks wird somit im folgenden stellvertretend eine Flammbehandlungswalze mit korrosionsbeständiger Oberflächenschicht beschrieben, die die folgenden Merkmale aufweist:

Die Flammbehandlungswalze umfasst zumindest drei in Axialrichtung der Flammbehandlungswalze versetzt zueinander liegende und in Umfangsrichtung der Flammbehandlungswalze verlaufende Bereiche, nämlich eine Mittelzone, an die sich jeweils zum zugehörigen stirnseitigen Ende der Flammbehandlungswalze eine Randzone anschließt, wobei in der Mittelzone die Oberfläche oder Mantelfläche der Flammbehandlungswalze eine metallische und / oder karbidische thermische Spritzschicht umfasst, insbesondere Flammspritzschicht umfasst, und / oder eine thermische Spritzschicht, insbesondere eine Flammspritzschicht, die unter Verwendung von karbidischen Pulvern und / oder aus verwandten Materialien aufgebaut ist. Die Randzonen umfassen eine direkt auf den FlammbehandlungswalzenGrundkörper aufgeschweißte metallische Schutzschicht oder eine Oberfläche in Form eines Schutzbleches, und die in den Randbereichen aufgeschweißte metallische Korrosionsschutzschicht, insbesondere in Form des aufgeschweißten metallischen Korrosionsschutzbteches, umfassen eine nickel- und / oder chromhaltige Stahllegierung.

Bei einer speziellen Flammbehandlungswalze umfasst die Oberfläche der Mittelzone eine nickel- und / oder chromhaltige Stahllegierung.

Dabei ist in einem speziellen Ausführungsbeispiel die Oberfläche der innengekühlten Walze in den Randbereichen und in dem Mittelbereich gemeinsam auf eine vorgebbare Oberflächengüte hin überschliffen.

In einem anderen Ausführungsbeispiel einer Flammbehandfungswalze beträgt die Axiallänge der mittleren Zone bezogen auf die Flammbehandlungsstation und / oder die Axiallänge der Brennereinrichtung und / oder die Breite der Folienbahn zumindest 60%, 70%, 80% oder zumindest 90% oder 95%.

Die Breite der Mittelzone der Flammbehandlungswalze bezogen auf die Axiallänge der Flammbehandlungswalze beträgt dabei z.B. zumindest 50%, 60%. 70% oder zumindest 80%.

Die axiale Länge der Randzonen und/oder der Abstand, an welchem die Randzone gemessen vom stirnseitigen Ende der Flammbehandlungswalze aus endet, beträgt zumindest jeweils 2%, vorzugsweise zumindest 5% oder 20% bezogen auf die Axiallänge der Flammbehandlungswalze oder bezogen auf die Axiallänge der Flammbehandlungsstation oder die Axiallänge der Brennereinrichtung oder die Breite des Kunststofffolienfilms.

In einem weiteren Beispiel einer Flammbehandlungswane gemäss der vorliegenden Erfindung ist die Randzone um ein Axialmaß verlängert, in welchem sich eine Überlappung mit dem Kunststofffiim ergibt.

Dabei kann die Oberfläche der Randzone aus einer schweißbaren Stahllegierung 316L und / oder C276 bestehten oder diese umfassen.

Weiter kann die Oberfläche der Randzone einer Flammbehandlungswalze in Form eines Schutzbleches aus einem rost- und / oder säurebeständigem Stahl 1.4301, 1.4303, 1,4401, 1.4404, 1.4406. 1.4505, 1.4506 oder ähnlichen Stählen dieser Werkstoffgruppe bestehen oder diese umfassen. Dem Fachmann sind die vorgenannten Stähle bzw. alle weiteren Stähle, die dieser Gruppe von Stähle zugeordnet sind, in allen ihren Eigenschaften wohlbekannt, so dass sich eine eingehende Beschreibung dieser Werkstoffe hier erübrigt.

Auch kann die Oberfläche der Mittelzone aus Stahllegierungen 316L, C276 und / oder aus karbidischen Pulvern CrC, TiC und / oder WC bestehen oder diese umfassen.

Die Erfindung betrifft in einem speziellen Ausführungsbeispiel eines erfindungsgemässen Verfahrens ein Verfahren zur Herstellung eines Werkstücks, insbesondere einer Flammbehandlungswalze, wie sie oben eingehend beschrieben wurde, wobei auf dem Flammbehandlungswalzengrundkörper in einer Mittelzone mit einer metallischen und / oder carbidischen thermischen Spritzschicht, insbesondere Flammspritzschicht beschichtet wird, und auf dem Walzengrundkörper in den zumindest beiden Randbereichen eine metallische Korrosionsschicht und / oder ein metallisches Korrosionsschutzblech aufgeschweißt wird.

In einem speziellen Ausführungsbeispiel eines erfindungsgemässen Verfahrens werden die Mittelschicht und die Randschichten nach dem Abschluss der Walzenbeschichtung gemeinsam auf die erforderliche Oberflächengüte, d.h. insbesondere auf eine vorgebbare Rauigkeit und / oder Rundlaufgenauigkeit hin überschliffen.

Dabei können im Speziellen als Beschichtungsmaterial für die geschweißte Oberfläche in den Randbereichen nickel- und/oder chromhaltige Stahliegierungen verwendet werden.

Desweiteren können für die im Mittelbereich vorgesehene thermisch gespritzte, im besonderen flammgespritzte Oberfläche, nickel- und / oder chromhaltige Stahllegierungen und/oder karbidische Pulver verwendet werden.

In einem speziellen Ausführungsbeispiel ist das Werkstück eine Flammbehandlungswalze, wobei eine erfindungsgemäße gekühlte Flammbehandlungswalze eine Walzenoberfläche aufweist, die zu einer deutlichen Verlängerung der durchschnittlichen Lebensdauer derartiger Flammbehandlungswalzenoberflächen führt. Die erfindungsgemäße Walze mit der kostengünstig herstellbaren Walzenoberfläche kann dabei dauerhaft in einem Produktionsprozess, beispielsweise in Folienreckanlagen eingesetzt werden, ohne dass thermomechanische Spannungen in Verbindung mit den korrosiven Rauchgasen einer Flammbehandlungsstation zum Schichtversagen führen, also zum Unbrauchbarwerden der obersten Walzenschicht führen. Als weiterer Vorteil kommt hinzu, dass bei der erfindungsgemäßen Lösung die Korrosionsschutzoberfläche auch auf schlanken Flammbehandlungswalzen aufgebracht werden kann, ohne dass im Beschichtungsprozess schädliche Eigenspannungen entstehen, die zu einem dauerhaften Verzug des Flammbehandlungswalzenkörpers führen würden.

Die erfindungsgemäße Flammbehandlungswalze umfasst dabei eine Kombinationsschichtanordnung mit zumindest drei in Axialrichtung der Flammbehandlungswalze versetzt zueinander liegenden und jeweils in Umfangsrichtung verlaufende Mantelzonen, nämlich eine mittlere Mantelzone sowie zwei den Stirnseitenbereichen der Flammbehandlungswalze näher liegende oder dazu benachbart liegende Randzonen. Die Randzonen sind dabei gegenüber der Mittelzone unterschiedlich hergestellt und / oder ausgebildet.

Die Randzone besteht erfindungsgemäß aus einer aufgeschweißten metallischen Korrosionsschutzschicht, Demgegenüber ist die Oberfläche der Mittelzone der innengekühlten Walze mit einer metallischen und/oder carbidischen thermischen Spritzschicht, insbesondere Flammspritzschicht beschichtet.

Als Beschichtungsmaterial für die geschweißte Oberfläche können beispielsweise nickel- und / oder chromhaltige Stahllegierungen in Frage kommen, wie z.B. 316L oder C276. Als Beschichtungsmaterialien für die flammgespritzte Oberfläche können ebenfalls nickel- und / oder chromhaltige Stahllegierungen verwendet werden, wie beispielsweise 316L, C276 oder verwandte Materialien oder karbidische Pulver wie z.B. CrC, TiC oder WC.

Die mittlere Zone mit der metallischen und / oder karbidischen Flammspritzschicht weist bevorzugt eine axiale Länge auf, die kleiner ist als die über die Flammbehandlungswalze zu behandelnde Folienbahn. Mit anderen Worten sollen die Randzonen eine Axiallänge aufweisen oder von der Flammbehandlungswalzen-Stirnseite in einem axialen Abstand enden, auf welchem bereits eine Filmumschlingung stattfindet. Bevorzugt ist also die axiale Länge der Randzonen größer und / oder endet in einem axialen Abstand von der Stirnseite der Flammbehandlungswalze in einem Bereich, bei welchem ein herzustellender Kunststofffolienfilm beispielsweise bei der Kunststofffolienproduktion die Walzenoberfläche von seinem Anlagebereich bereits überdeckt.

Mittels einer so aufgebauten Flammbehandlungswalze ist es nunmehr möglich, eine kostengünstige Walzenoberfläche zu schaffen, die dauerhaft im Produktionsprozess von Folienreckanlagen eingesetzt werden kann, ohne dass thermomechanische Spannungen in Verbindung mit den korrosiven Rauchgasen einer Flammbehandlungsstation zum Schichtversagen führen.

Denn während der Herstellung der Kunststofffoüenbahn bedeckt diese nicht die gesamte Schutzoberfläche der Flammbehandlungswalze, die z.B. in einer Flammbehandlungsstation eingesetzt wird. Am Rand der Folienbahn kann die Flamme eines Gasbrenners direkt auf die Flammbehandlungswalze brennen. Hierbei können Rissbildungen infolge hoher thermomechanischer Spannungen aus der direkten Beflammung der Walzenoberfläche in Verbindung mit den korrosiven Eigenschaften des im Beflammungsprozess entstehenden Rauchgases die Walzenoberfläche schädigen oder zu deren Versagen führen. Erfindungsgemäß ist von daher in diesem freien Randbereich die Walzenoberfläche mit einer aufgeschweißten metallischen Korrosionsschutzschicht versehen. Bevorzugt reicht die vorstehend erwähnte Randschicht jedoch weiter in die Walzenmitte, so dass sich noch zumindest ein überlappender Bereich ergibt, bei welchem der Folienrand auf dieser äußeren Randschicht die Walze umschlingt. Diese stoffschlüssige Verbindung von Schutzoberfläche und Walzengrundkörper widersteht den thermomechanischen Spannungen aus der möglichen direkten Beflammung der Walzenoberfläche sowie den korrosiven Gasen, die direkt zur Walzenoberfläche gelangen können. Innerhalb der Breite einer betriebenen Flammbehandlungsstation jedoch ist die Walzenoberfläche der innengekühlten Walze immer von der Folienbahn abgedeckt und somit nicht direkt der Beflammung ausgesetzt. Genau in diesem Bereich wird vorzugsweise zumindest in einer Axiallänge von zumindest 60% bis 80% oder beispielsweise auch bis zumindest 90% der Folienbreite die erwähnte metallische oder karbidische thermische Spritzschicht, insbesondere Flammspritzschicht verwendet, die eine kostengünstige Beschichtung erlaubt. Zudem werden mit diesem Beschichtungsverfahren gegenüber dem Aufschweißen deutlich reduzierte Eigenspannungen in den Walzenkörper eingebracht und dieser somit vor thermisch bedingtem Verzug bewahrt, der sich im Randbereich in der Regel bei sehr schlanken Flammbehandlungswalzen kaum auswirkt.

In einer bevorzugten Ausführungsform der Erfindung werden sowohl die Randschichten als auch die Mittelschicht nach Abschluss der Walzenbeschichtung gemeinsam auf die erforderliche Oberflächengüte (Rauigkeit, Rundlaufgenauigkeit) hin überschliffen.

Die Erfindung wird im folgenden an Hand der schematischen Zeichnung näher erläutert. Es zeigen:
- Fig. 1: eine Flammbehandlungsstation mit einem erfindungsgemässen Werkstück in Form einer Flammbehandlungswalze;
- Fig. 2: ein erfindungsgemässes Werkstück in Form eines Flügels eines Schleusentors;
- Fig. 3: ein erfindungsgemässes Werkstück als hydraulischer Kolben,

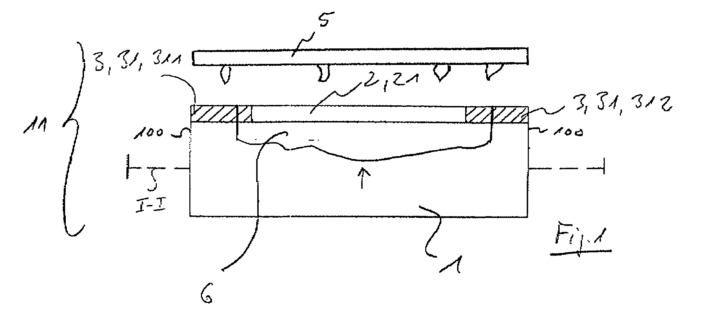

In Figur 1 ist in schematischer Darstellung eine Maschine 11 in Form einer Flammbehandlungsstation 11 angedeutet, die in axialer Richtung 1-1 eine streifen- oder linienförmigen Brennereinrichtung 5 umfasst. Parallel zu dieser streifen- oder linienförmigen Brennereinrichtung 5 ist darstellungsgemäss unterhalb dazu eine Flammbehandlungswalze 1 vorgesehen, die um ihre Achse 1-1 im Betriebszustand rotiert.

Die Flammbehandlungswalze 1 wird beispielsweise in einer mono- oder biaxialen Folienreckanlage eingesetzt, z.B. bei der Folienherstellung. In der Figur 1 ist dazu ausschnittsweise eine Folienbahn 6 gezeigt, die im gezeigten Ausführungsbeispiel, wie durch den Pfeil angedeutet, von unten kommend in einem Umschlingungswinkel unterhalb der Flammbehandlungswalze 1 an einem Mantelumfang der Flammbehandlungswalze 1 anliegend herumgeführt und dann weitergeleitet wird. Die Manteloberfläche mit der anliegenden Kunststofffolienbahn 6 befindet sich somit mit einer parallel zur Rotationsachse 1-1 verlaufenden Axiallinie direkt unterhalb der streifen- oder linienförmigen Brennereinrichtung 5.

Die Abzugsrichtung der Folienbahn 6 verläuft somit im gezeigten Ausführungsbeispiel senkrecht zur Rotationsachse I-I der Flammbehandlungswalze 1 und somit quer bzw. senkrecht zur axialen Ausrichtung der Flammbehandlungsstation 11, d.h. also quer oder senkrecht zur streifen- oder linienförmigen Brennereinrichtung 5.

Wie aus der schematischen Darstellung zu ersehen ist, weist die Brennereinrichtung 5 vorzugsweise eine axiale Länge auf, die in etwa der Breite der Kunststofffolienbahn 6 entspricht.

Im Bereich der Folienbahn 6 wird die Ober- oder Mantelfläche der innengekühlten Flammbehandlungswalze 1 (wobei im vorliegenden Ausführungsbeispiel die Kühleinrichtung selbst nicht näher dargestellt ist und insoweit auf vorbekannte Lösungen verwiesen wird) immer von der Folienbahn 6 abgedeckt und ist somit der direkten Beflammung nicht ausgesetzt. Von daher ist eine mittlere Zone oder eine mittlerer Bereich 21 der umlaufenden Manteloberfläche der Flammbehandlungswalze 1 mit einer kostengünstig herstellbaren metallischen und/oder carbidischen Flammspritzschicht 2 als Oberflächenschicht 2 versehen, d.h. beschichtet.

Ferner ist benachbart zu den Stirnseiten 100 bzw. von der Mittelzone 21 aus betrachtet diesen Stirnseiten 100 näherliegend jeweils eine Randschicht 3, d.h. eine Randzone 3 der in Rotationsrichtung umlaufenden Mantelfläche vorgesehen, in welcher die Walzenoberfläche anders ausgebildet und / oder hergestellt ist, als die Walzenoberfläche in der Mittelzone 21. Im Bereich dieser Randschichten 3 oder Randzone 3 am Ende der Flammbehandlungswalze 1 besteht die Walzenoberfläche aus einer aufgeschweißten Schutzbeschichtung 31 in Form einer metallischen Schutzschicht 31. Hierdurch wird eine stoffschlüssige Verbindung zwischen der Schutzoberfläche und dem Walzengrundkörper hergestellt, wobei diese stoffschlüssige Verbindung thermomechanische Spannungen aus der möglichen direkten Beflammung der Walzenoberfläche widersteht.

Bevorzugt weist die Randschicht 3 nicht eine axiale Länge auf und / oder endet in einem axialen Abstand von den gegenüberliegenden Stirnseiten 100 derart, dass der der mittleren Zone 21 zugewandt liegende Rand nicht exakt am Folienrand endet, sondern diese Randzone 3 um einen vorgebbaren Randzonenabschnitt in Richtung mittlerer Zone 21 vergrößert ist, und zwar so, dass das Ende oder der umlaufende Rand der Randzone 3 im Bereich der Flammstation 11 und damit unterhalb der Folienbahn 6 liegend endet. Mit anderen Worten ist die Randzone 3 nicht nur bis zum Rand der Folienbahn 6 oder der Flammstation 11 bemessen, sondern ragt um die vorgebbare Randzone bis unterhalb der Folienbahn 6, so dass es hier entsprechend dem Randzonenbereichsabschnitt zu einer Überdeckung mit dem Randbereich der Folienbahn 6 führt, wie dies in der Zeichnung dargestellt ist.

Die axiale Länge der Mittelzone 21 oder Mittelschicht 2 sollte üblicherweise zumindest 60%, insbesondere zumindest 70% oder 80% und ggf. zumindest 90% der Breite der zu behandelnden Folienbahn 6 und/oder der Brennereinrichtung 5 betragen. Mit anderen Worten wird die axiale Länge der Mittelschicht 2, 21 in einer bevorzugten Ausführungsform zumindest 50%, insbesondere zumindest 60%, zumindest 70% oder zumindest 80% der axialen Länge einer Flammbehandlungswalze 1 ausmachen.

Von daher sollte die axiale Länge der Randzone 3 bzw. der Abstand, an dem die Randzonen 3 vom stirnseitigen Ende 100 der Walze 1 enden, bevorzugt zumindest 5%, insbesondere zumindest 10%, 15% oder zumindest 20% der Breite der Folienbahn 6 betragen. Bezogen auf die axiale Länge einer Flammbehandlungswalze 1 kann dieses Maß zumindest 10%. 20% oder zumindest 30% der axialen Länge der Walze 1 betragen.

Eine erfindungsgemäße Flammbehandlungswalze 1 wird so hergestellt, dass auf den Randzonen 3 des Flammbehandlungswalzengrundkörpers eine metallische Schutzschicht 31 aufgeschweißt wird, um eine stoffschlüssige Verbindung herzustellen. Diese aufgeschweißte metallische Schutzschicht 31 ist also zumindest im Bereich 3 und vorzugsweise einschließlich des Bereiches 21 vorgesehen. In der angrenzenden Mitteizone 21 wird, wie ausgeführt, die metallische oder karbidische Oberflächenschicht 2 als thermische Spritzschicht 2, insbesondere Flammspritzschicht 2 aufgebracht (beschichtet), wobei beide Schichten nach Abschluss der Walzenbeschichtung gemeinsam auf die erforderliche Oberflächengüte zur Herstellung einer gemeinsamen Rauigkeit, Rundlaufgenauigkeit etc. hin überschliffen werden.

Als Beschichtungsmaterialien für die geschweißte Oberfläche können nickel- und chromhaltige Stahllegierungen in Frage kommen. Beschichtungsmaterialien für die flammgespritzte Oberfläche können nickel- und chromhaltige Stahllegierungen sein wie z.B. 316L, C276 oder verwandte Materialien oder carbidische Pulver wie z.B. CrC, TiC oder WC. Darüber hinaus können selbstverständlich alle oben bereits ausführlich diskutierten Materialien vorteilhaft zur Bildung der Oberflächenschicht 2 bzw. zur Bildung der Schutzbeschichtung 31 verwendet werden.

Bei insbesondere sehr langdimensionierten Flammbehandlungswalzen 1, die besonders groß vor allem im Verhältnis zur Länge der Brennerstation oder der Brennereinrichtung 5 sind, kann zwischen den Stirnseiten 100 der Flammbehandlungswalze und der nach innen versetztliegenden Randzone 3 ggf. nochmals eine weitere Randzone 3 vorgesehen sein, die ggf. mit weniger aufwendigen und teuren Schutzschichten 31 versehen und/oder gestaltet ist, da eventuell in diesen außenliegenden Abschnitten 3 der Flammbehandlungswalze 1 benachbart zu den Stirnseiten 100 nicht mehr so aggressive Umgebungsbedingungen herrschen.

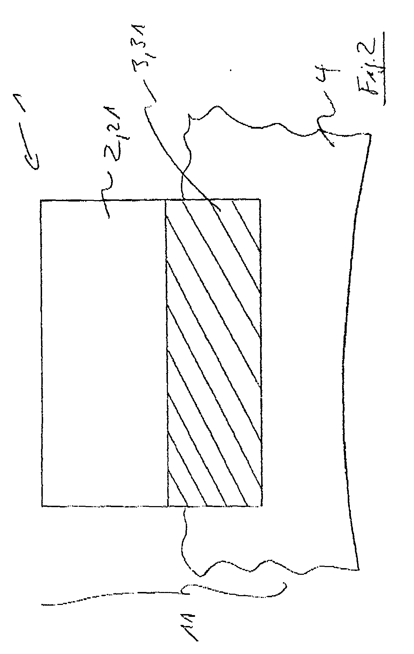

In Figur 2 ist in schematischer Darstellung ein anderes Ausführungsbeispiel eines erfindungsgemässen Werkstücks 1 in Form eines Flügels 1 eines Schleusentors 11 dargestellt. Der Flügel 1 des Schleusentors 11 ist einem unteren vorgebbaren Bereich 3, der zumindest teilweise in Meerwasser 4 eingetaucht ist, mit einer Schutzbeschichtung 31 gemäss der vorliegenden Erfindung versehen. Die Schutzbeschichtung 31 schützt somit den darstellungsgemäss unteren Bereich 3 des Flügles 1 durch die aufgeschweisste metallische Korrosionschutzschicht 31 vor dem aggressiven salzhaltigen, eventuell mit Chemikalien verschmutzen Meerwasser 4. lm darstellungsgemäss oberen Bereich 21, auf den das Meerwasser 4 nicht direkt einwirkt, ist eine thermisch gespritzte Oberflächenschicht 2 aufgebracht, die im wesentlichen eine korrosions- und oxidationsresistente Hartschicht 2 ist, die den oberen Bereich 21 sowohl gegen mechanische Einflüsse und Beschädigungen schützt, als auch ein Rosten des Flügels 1 in diesem Bereich verhindert. Bei dem in Fig. 2 dargestellten Beispiel kann insbesondere ein Grossteil der Kosten gespart werden, weil nur auf den unteren Bereich 3 eine metallische Schutzbeschichtung 31 aufgeschweisst werden muss, während der obere Bereich 21 nur thermisch beschichtet werden muss, zum Beispiel mittels eines sehr wirtschaftlichen HVOF-Verfahrens (HochgeschwindigkeitsFlammspritzen) oder eines anderen thermischen Spritzverfahrens.

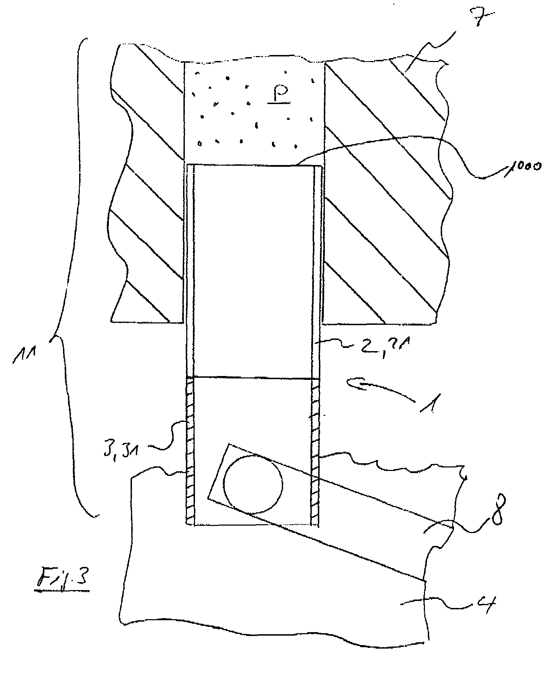

In Fig. 3 ist schliesslich ein drittes Ausführungsbeispiel eines erfindungsgemässen Werkstücks 1 schematisch dargestellt, das als hydraulischer Kolben 1 in einer hydraulischen Maschine 11 vorgesehen ist.

Der hydraulische Kolben 1 ist in einem hydraulischen Zylinder 7 derart angeordnet, dass er an einer Arbeitsfläche 1000 mit einem hydraulischen Druck P beaufschlagbar ist, so dass der Kolben 1 unter der Einwirkung des hydraulischen Drucks P, der zum Beispiel durch eine hydraulische Flüssigkeit vermittelbar ist, antreibbar ist, so dass durch die Schubstange 8, die mit dem Kolben 1 in Wirkverbindung steht, ein in Fig. 3 nicht dargestellter Mechanismus beeinflussbar ist. Ein solcher Mechanismus könnte z.B. ein Flügel 1 eines Schleusentors 11 gemäss Fig. 2 sein, so dass durch den Kolben 1 über die Schubstange 8 das Schleusentor 1 der Fig. 2 bewegbar ist.

Im Bereich 21, in dem der Kolben 1 im Zylinder 7 hin- und her bewegbar angeordnet ist, ist der Kolben 1 mit einer Verschleisschutzschicht 2, zum Beispiel auf Eisenbasis versehen, die einerseits als Hartschicht 2 ausgestaltet ist und gleichzeitig durch den Einbau von an sich bekannten Trockenschmierstoffen wie BN, MnS und anderen im Rahmen dieser Anmeldung genannten Stoffen, gute tribologische Eigenschaften aufweist, die eine optimale Führung des Kolbens 1 im Zylinder 7 gewährleisten.

Im darstellungsgemäss unteren Bereich 3 ist der Kolben 1 mit einer Schutzbeschichtung 31 versehen, die im vorliegenden Fall eine Korrosionsschutzschicht in Form eines aufgeschweissten Korrosionsschutzblechs 31 ist. Die Schutzbeschichtung 31 ist notwendig, da der Kolben 1 zumindest teilweise im Bereich 3 in einem aggressiven Fluid 4, z.B. in einem aggressiven Öl 4 oder in Seewasser 4 oder in einem aggressiven sauren oder alkalischen Milieu 4 geführt wird und / oder in diesem Bereich einer anderen aggressiven Umgebung 4, zum Beispiel heissen Gase, insbesondere Flamme, ausgesetzt ist.

Es versteht sich, dass die oben beschriebenen speziellen Ausführungsbeispiel gemäss der vorliegenden Erfindung nur exemplarisch zu verstehen sind und sich die Erfindung selbstverständlich auf alle Werkstücke bezieht, die den geschilderten Anforderungen genügen müssen. Insbesondere bezieht sich die Erfindung auch auf alle geeigneten Kombinationen der zuvor geschilderten Ausführungsbeispiel, insbesondere auch, aber nicht nur, was die verschiedenen Arten von Oberflächenschichten als auch die geannten und zweckmässig verwendbaren Materialien angeht.

## Patentansprüche

1. Werkstück mit einer thermisch gespritzten Oberflächenschicht (2), wobei an dem Werkstück in mindestens einem vorgebbaren Bereich (3) eine Schutzbeschichtung (31), insbesondere eine korrosionsbeständige Schutzbeschichtung (31) vorgesehen ist, **dadurch gekennzeichnet, dass** die Schutzbeschichtung (31) eine aufgeschweißte metallische Schutzbeschichtung (31), insbesondere eine Korrosionsschutzschicht in Form eines aufgeschweißten metallischen Korrosionsschutzbleches (31) ist.

2. Werkstück nach Anspruch 1, wobei die Schutzbeschichtung (31) eine nickel- und / oder chromhaltige Stahllegierung und / oder eine schweißbare Stahllegierung 316L oder C276 umfasst, und / oder einen rostbeständigen und / oder einen säurebeständigen Stahl aus der Werkstoffgruppe umfassend die Stähle 1.4301, 1.4303, 1,4401, 1.4404, 1.4406, 1.4505, 1.4506 umfasst, und / oder einen karbidischen und / oder keramischen Werkstoff, insbesondere CrC, TiC, TaC, Cr₃C₂, Fe₃C, WC, Diamant, Niobiumcarbid, Vanadiumcarbid, und / oder Al₂O₃, Cr₂O₃. TiO₂, ZrO₂, und / oder ein Borid und / oder ein Nitrid, insbesondere cBN oder hBN umfasst.

3. Werkstück nach Anspruch 1 oder 2, wobei die gespritzte Oberflächenschicht (2) eine nickel- und / oder chromhaltige Stahllegierung umfasst, und / oder eine Stahllegierung 316L oder C276 umfasst, und / oder einen rostbeständigen und / oder einen säurebeständigen Stahl aus der Werkstoffgruppe umfassend die Stähle 1.4301, 1.4303, 1,4401, 1.4404, 1.4406, 1.4505, 1.4506 umfasst, und / oder eine mittels einem karbidischem und / oder keramischem Pulver gespritzte Oberflächenschicht (2), insbesondere eine mittels CrC, TiC, TaC, Cr₃C₂, Fe₃C, WC, Diamant, Niobiumcarbid, Vanadiumcarbid, und / oder Al₂O₃, Cr₂O₃, TiO₂, ZrO₂, und / oder einem Borid und / oder einem Nitrid, insbesondere cBN oder hBN, gespritzte Oberflächenschicht (2).

4. Werkstück nach einem der vorangehenden Ansprüche, wobei die Oberflächenschicht (2) ein Element aus der Gruppe der Elemente bestehend aus C, Cr, Mn, Fe, Mo, S, P, Y, Si, Hf, Pa, Re, Pt, Co, Ni umfasst, und insbesondere eine Gleitschicht (2) und / oder eine Hartschicht (2) ist.

5. Werkstück nach einem der vorangehenden Ansprüche, wobei die Oberflächenschicht (2) ZrO₂ und oder YO₂, insbesondere mit Yttrium stabilisiertes ZrO₂-8%Y₂O₃, und / oder ZrSiO₄ und / oder SiO₂ und / einem Lanthanoxid und / oder Sc₂O₃ umfasst, und insbesondere eine Wärmedämmschicht (2) ist.

6. Werkstück, insbesondere Flammbehandlungswalza (1) nach einem der vorangehenden Ansprüche, wobei das Werkstück zumindest zwei in einer Axialrichtung (I-I) des Werkstücks versetzt zueinander liegende und in Umfangsrichtung des Werkstücks verlaufende Bereiche (3, 311, 312) umfasst, welche Bereiche (3, 311, 312) durch eine Mittelzone (21), an die sich jeweils zum zugehörigen stirnseitigen Ende des Werkstücks eine Randzone (3, 311, 312) anschließt, gebildet sind, und die Mittelzone (21) eine gespritzte Oberflächenschicht (2) aufweist, wobei die Randzonen (3, 311, 312) eine auf das Werkstück aufgeschweißte Schutzbeschichtung (31), insbesondere in Form eines Schutzbleches (31) umfassen.

7. Werkstück nach einem der vorangehenden Ansprüche, wobei das Werkstück eine Walze (1), insbesondere eine Walze (1) zum Walzen von Papier, von Metall, Glas, Kunststoff, oder einem Verbundwerkstoff, im Speziellen zum Walzen von heissen Metall-, Glas-. Kunststoffbahnen oder Bahnen aus einem Verbundwerkstoff ist.

8. Werkstück nach einem der vorangehenden Ansprüche, wobei das Werkstück eine Komponente einer Maschine (11), im Speziellen einer Brennkraftmaschine (11), insbesondere ein Kolben (1), ein Zylinder (1) oder ein Ventil (1) ist, oder eine Komponente einer Werkzeugmaschine (11), insbesondere einer Flammbehandlungsstation (11) oder einer Spritzgussmaschine (11) ist.

9. Werkstück nach einem der vorangehenden Ansprüche, wobei die Schutzbeschichtung (31) eine Schutzschicht (31) gegen Korrosion durch chemisch und / oder physikalisch aggressive Fluide (4), insbesondere Salzwasser (4) und / oder Säuren (4) und / oder Laugen (4) und / oder heisse Flüssigkeiten (4) und / oder heisse Gase (4), insbesondere Flamme (4), im speziellen gegen oxidierende und / oder reduzierende Flüssigkeiten (4) und / oder Gase (4) ist.

10. Verfahren zur Herstellung eines Werkstücks (1), insbesondere Flammbehandlungswalze (1), nach einem der Ansprüche 1 bis 9, **dadurch gekennzeichnet, dass** eine Oberflächenschicht (2) mittels einem thermischen Spritzverfahren, insbesondere mittels Flammspritzen, Lichtbogenspritzen, Plasmaspritzen, Flammschockspritzen Hochgeschwindigkeitsflammspritzen, Flammspritzschweissen oder einem Kaltspritzverfahren, insbesondere Cold-Spraying, aufgebracht wird, und eine metallische Schutzbeschichtung (31), insbesondere eine Korrosionsschicht (31) und / oder ein Korrosionsschutzblech (31) aufgeschweißt wird.
